# EUROPÄISCHE PATENTSCHRIFT

(11) **EP 3 016 415 B1**
(45) Veröffentlichungstag und Bekanntmachung des Hinweises auf die Patenterteilung: **20.02.2019**
(21) Anmeldenummer: 15001860.4
(22) Anmeldetag: 23.06.2015
(51) Int. Cl.: H04W 4/90, H04W 4/029, H04W 4/38, H04W 4/80

(54) **VERFAHREN UND VORRICHTUNG ZUR ORTUNG VON PERSONEN**
METHOD AND DEVICE FOR LOCATING PEOPLE
PROCEDE ET DISPOSITIF DESTINES A LA LOCALISATION DE PERSONNES

(30) Priorität: 03.11.2014 DE 102014016200
(43) Veröffentlichungstag der Anmeldung: 04.05.2016
(73) Patentinhaber: Brettschneider, Peter, 73312 Geislingen (DE)
(72) Erfinder: Brettschneider, Peter, 73312 Geislingen (DE)
(74) Vertreter: Riebling, Peter

(56) Entgegenhaltungen:
- WO-A1-2012/167301
- JOUNI RANTAKOKKO ET AL: "Accurate and reliable soldier and first responder indoor positioning: multisensor systems and cooperative localization", IEEE WIRELESS COMMUNICATIONS, IEEE SERVICE CENTER, PISCATAWAY, NJ, US, Bd. 18, Nr. 2, 1. April 2011 (2011-04-01), Seiten 10-18, XP011354042, ISSN: 1536-1284, DOI: 10.1109/MWC.2011.5751291

## Beschreibung

Gegenstand der Erfindung ist ein Verfahren und ein System zur Ortung von Personen nach dem Oberbegriff des Patentanspruches 1.

Eine auf den gleichen Anmelder zurückgehende Druckschrift DE 103 15 277 A1 beschreibt ein Verfahren und eine Vorrichtung zur Ortung von Personen nach dem Oberbegriff des Patentanspruches 1. Bei diesem bekannten Verfahren geht es darum, dass die Ortung von Personen innerhalb eines zu überwachenden Bereichs mit wenigstens drei dem Ultra Wide Band (UWB) arbeitenden Sende- und Empfangsgeräten erfolgt, von denen eines ortsfest im zu überwachenden Bereich angeordnet wird und eines an der zu ortenden Person angebracht wird und ferner ein drittes bei einem außerhalb des zu überwachenden Bereiches angeordneten Überwachungscomputer vorgesehen ist und mit diesem verbunden ist.

Ein Merkmal der Ultra Wide Band Technologie ist die Nutzung extrem großer Frequenzbereiche mit einer Bandbreite von mindestens 500 MHz oder von mindestens 20 % des arithmetischen Mittelwertes von unterer und oberer Grenzfrequenz des genutzten Frequenzbandes. Angewendet wird diese Technologie anderem für preisgünstige und energieeffiziente Geräte mit der Möglichkeit einer Positionsbestimmung mit moderaten Datenraten, beispielsweise in Sensornetzwerken (Bewegungsmelder durch Mauern hindurch), unter anderem 802.15.4a. Auch bietet sich die Möglichkeit der digitalen Funkübertragung mit hoher Datenrate für kurze Distanzen.

Grundsätzlich verwendet das aus der DE 103 15 277 A1 bekannte Verfahren demnach drei unterschiedliche, über Datenfunkverbindungen miteinander verbundene Geräte, mit denen es möglich ist, eine Ortung einer in einer unübersichtlichen Umgebung befindlichen Person vorzunehmen.

Die genannte Druckschrift beschäftigt sich jedoch nicht mit dem Problem, was passiert, wenn die UWB-Verbindung abbricht. Versuche haben nämlich gezeigt, dass die UWB-Verbindung zwar günstig für die Übertragung von Daten ist, aber auf Sichtweite begrenzt ist. Wenn jedoch in einem Gebäude oder in anderen unübersichtlichen Umgebungen, wie z. B. Untertage, in Tunnels und dergleichen, eine Ortung von Personen erfolgen soll, hat sich herausgestellt, dass die UWB-Verbindung nicht mehr zuverlässig arbeitet.

Die US 2012/0025977 A1 verwendet als Datenverbindung zur Ortung in einem Gebäude befindlichen Personen mehrere Transmitter, wobei ein erster Transmitter an der zu ortenden Person angebracht ist und sowohl geeignet ist, im digitalen Funk als auch als Radiosignal zu arbeiten. Ferner beschreibt diese Druckschrift die Anordnung eines Einsatzrechners in einem Rettungsfahrzeug und die Anordnung von mehreren mobilen Funkmasten, die um das zu untersuchende Gebäude aufgestellt sind.

Nachteil der genannten Druckschrift ist jedoch, dass vorausgesetzt wird, dass die Ortung der im Gebäude befindlichen Person über eine Triangulation stattfindet, d.h. es wird die Laufzeit zwischen mehreren Mobilfunkmasten und dem jeweiligen Transmitter an der Person ermittelt und aus einer Triangulationsmessung der augenblickliche Aufenthaltsort der Person im Gebäude bestimmt.

Nachteil dieses Verfahrens ist, dass es relativ ungenau ist, weil die Triangulation nur genau genug ist, wenn die Funkwellen zwischen den Mobilfunkmasten und dem Transmitter der zu ortenden Person ungestört bleiben; weiterer Nachteil dieser Druckschrift ist, dass eine Vielzahl von Mobilfunkmasten (mindestens drei) den nicht näher zugeordneten Transmittern vorgesehen werden müssen, um eine Triangulationsmessung durchführen zu können.

Im Prinzip verzichtet die genannte Druckschrift auf im oder am Gebäude angeordneten Satellitenstationen, sondern verwendet ausschließlich außerhalb des Gebäudes angeordnete Mobilfunkstationen, was mit schwerwiegenden Nachteilen verbunden ist.

Aus der Veröffentlichung RANTAKOKKO, Jouni, et al.: Accurate and reliable soldier and first responder indoor positioning; multisensor systems and cooperative localization. Wireless Communications, IEEE, 20111, 18. Jg., Nr. 2, S. 10-18 ist grundsätzlich ein Verfahren und eine Vorrichtung zur Ortung von Personen bekannt geworden, welches jedoch davon ausgeht, dass ein Transmitter/Receiver in einem gepanzerten Fahrzeug außerhalb des zu überwachenden Gebäudes verwendet wird. Es ist aus dieser Druckschrift nicht zu entnehmen, dass der Transmitter/Receiver im Gebäude selbst auf einer bestimmten Ebene angeordnet wird, mit dem Ziel die Datenübertragung zu verbessern.

Nachteil der Anordnung der Verwendung eines außerhalb des Gebäudes angeordneten Transmitter/Receivers, der in einem mobilen Fahrzeug angeordnet ist, ist die Ungenauigkeit der Ortung und die Unsicherheit bei der Durchdringung der Wände des Gebäudes, weil im schlimmsten Fall eine Vielzahl von Wänden bei der Funkübertragung zu durchdringen sind. Dies vor allem dann, wenn sich das Transmitter/Receiver-Fahrzeug gerade auf der entgegen gesetzten Seite des Gebäudes befindet.

Daher ist es im Sinne dieser Druckschrift nachteilig, wenn ein mobiles Fahrzeug den Transmitter/Receiver aufnimmt und lediglich auf Erdbodenniveau verharrt, weil der Funkverkehr mit den im Gebäude auf verschiedenen Ebenen operierenden Einsatzpersonen sehr bald abbrechen wird. Die Genauigkeit der Ortung und der Datenübertragung ist damit stark beeinträchtigt.

Das Szenario, von dem die genannte Druckschrift ausgeht, bezieht sich auf einen militärischen Einsatz, bei dem es ohnedies erforderlich ist, gepanzerte Fahrzeuge außerhalb eines Gebäudes zu verwenden, um die Zerstörung dieser Fahrzeuge zu vermeiden.

Die Erfindung geht im Vergleich zu dieser Druckschrift einen anderen Weg, weil die Erfindung einen Katastrophenfall annimmt, bei dem keine Fahrzeuge Voraussetzung sind, die auf Erdbodenniveau verharren, sondern die Erfindung geht davon aus, dass die Referenzstationen im Gebaude selbst abgesetzt werden und jeder Ebene eine eigene Referenzstation zuzuordnen ist.

Damit besteht der Vorteil, dass durch die Anordnung der Referenzstation im Gebäude eine wesentlich bessere Durchdringung der Böden und Wände im Gebäude bei der Funkverkehrübertragung gegeben ist und die Datenübertragung vergleichsweise sicherer ist als in der oben genannten Druckschrift.

Ein weiteres Merkmal der Erfindung ist, dass auf verschiedenen Einsatzebenen im Gebäude unterschiedliche Referenzstationen verwendet werden, so dass damit ein störungsfreier Funkverkehr und eine stabile Funkübertragung zwischen jeder auf jeweils einer Einsatzebene befindlichen Referenzstation gewährleistet ist.

Das Problem einer störungsfreien und von Fehlübertragungen befreiten Funkübertragung kann mit der genannten Literaturstelle nicht gelöst werden.

Nach einem weiteren Merkmal der Erfindung ist vorgesehen, dass die in das Gebäude verbrachte Referenzstation auch "genullt" werden kann. Es kann z. B. von einer Person außerhalb des Gebäudes über eine Leiter oder eine andere Aufstiegshilfe die Referenzstation von der Außenseite des Gebäudes her auf eine bestimmte Einsatzebene verbracht werden, und in diesem Fall ist es notwendig, dass die auf der Einsatzebene abgestellte Referenzstation "genullt" wird, was bedeutet, dass durch eine Betätigung einer Quittierungstaste die Höhenlage der Referenzstation festgelegt wird.

Damit besteht auch der Vorteil, dass unterhalb der Einsatzebene liegende, weitere Einsatzebenen erkannt werden können.

Auch hier ist es möglich, die Referenzstation vom Erdgeschoss beispielsweise in ein Kellergeschoss zu verbringen und dort mit einer "Nullung" zu versehen, um der Referenzstation die für sie vorgesehene Höhenlage zuzuordnen.

Zwar verwendet die genannte Literaturstelle auch sogenannte "Foot-Mounted-IMU", jedoch handelt es sich bei diesen fußreferenzierten Sensoren lediglich um Sensoren, die typische Gehbewegungen, Sprintbewegungen, Seit-Step-Bewegungen, Kletterbewegungen und Kraulbewegungen erfassen sollen.

Es ist aus dieser Druckschrift jedoch nicht zu entnehmen, dass spezielle Sensoren im Fußbereich oder im Beinbereich angeordnet sind, die angeben, dass die beteiligte Einsatzperson nunmehr am Fußboden kriecht und sich lediglich auf Knien und Händen fortbewegt. oder gar ausgestreckt auf dem Fußboden liegt und nicht mehr einsatzfähig ist.

Aus Figur 2 der Druckschrift ergibt sich, dass lediglich Beschleunigungssensoren verwendet werden und hieraus ein Bewegungsprofil abgeleitet wird, welches nur über den Stillstand der Person und über die Gehbewegung der Person Auskunft geben kann. Ob sich diese Person tatsächlich am Boden auf Knien und Händen bewegt oder ausgestreckt liegt, ist aus der Druckschrift nicht zu entnehmen.

Die vorliegende Erfindung verwendet hingegen personenbezogene Sensoren, die Personen-Bewegungen auf der Einsatzebene erfassen und nur dann zum Einsatz kommen, wenn die Funkverbindungen mit der UWB-Datenverbindung abbricht.

Es handelt sich also um eine Notmaßnahme, während die genannte Druckschrift die Erfassung personenbezogener Bewegungen dauernd durchführt, was zu einem erhöhten Datenanfall führt, der nur schwer in kurzer Zeit zu bewältigen ist, ohne die Datenübertragung aus den anderen Signalquellen zu gefährden.

Aus diesem Grund sieht die Erfindung eine Vereinfachung dergestalt vor, dass auf die Erfassung personenbezogenen Bewegungsdaten erst dann umgeschaltet wird, wenn die UWB-Datenverbindung versagt.

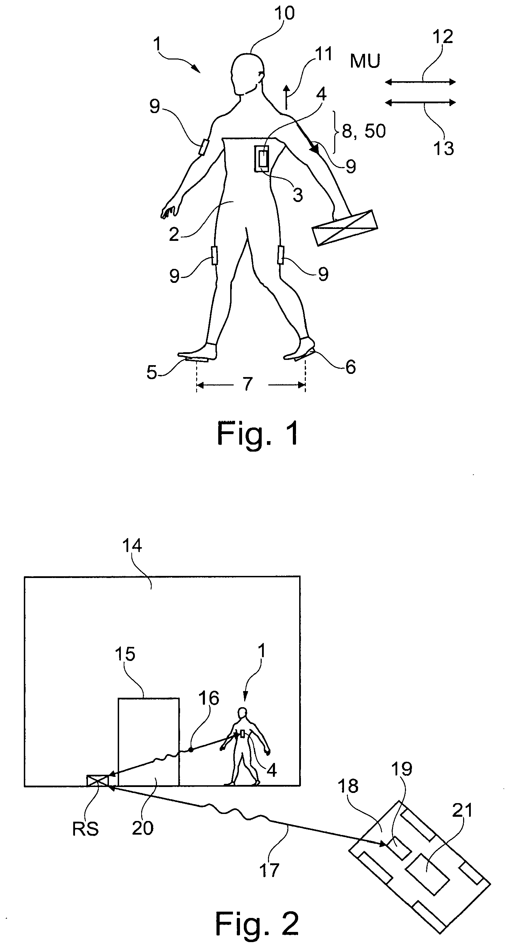

Aus der Druckschrift MINUTOLO, Riccardo; ANNONI, Luca Alfredo: Indoor localization with multi sensor data fusion in Ad Hoc mobile scenarios. In: Ultra-WideBand (ICUWB), 2014 IEEE International Conference on. IEEE, Sept. 2014. S. 403-408. ist in Kapitel II in Verbindung mit Figur 1 bis 3 eine In-Haus-Ortung mit einer Vielzahl von Sensoren in einer ad hoc Umgebung zu entnehmen. Es wird unter Anderem auch eine UWB-Radio-Verbindung angegeben.

Weitere Einzelheiten im Hinblick auf den vorliegenden Erfindungsgegenstand lassen sich aus dieser Druckschrift nicht entnehmen, weil diese Druckschrift im mit Beschleunigungssensoren arbeitet, die ungenau sind.

Aus der Figur 1 dieser Druckschrift lässt sich entnehmen, dass fußgebundene Sensoreinheiten lediglich an einem (einzigen) Fuß angeordnet sind, so dass damit lediglich die Bewegung einer Person erfasst werden kann, nicht aber die Schrittlänge oder sonstige Bewegungen (wie Kriechbewegungen), die für den Zustand der Person maßgebend sind.

Aus der weiteren Druckschrift DUAN, Chunjie, et al. A non-coherent 802. 15. 4a UWB impulse radio. In: Ultra-Wideband, 2007. ICUWB 2007. IEEE International Conference on. IEEE, 2007. S. 146-151. lässt sich lediglich ein Inhouse-Positionssystem entnehmen, welches mit Beschleunigungssensoren und kopfgetragenen Sensoren arbeitet.

Die Umschaltung von einem Sendemodus auf einen anderen Sendemodus, wenn eine Störung in der Datenverbindung entsteht, lässt sich aus dieser Druckschrift jedoch nicht entnehmen. Die genannte Druckschrift ist im Übrigen auch auf GPS-Signale angewiesen, die in der Regel in Inhouse-Anwendungen nicht erfassbar sind.

Aus der weiteren Druckschrift COLLIN, Jussi, et al.: Indoor positioning system using accelerometry and high accuracy heading sensors. In: Proc. of GPS/GNSS 2003 Conference. 2003 (Session C3),.Portland OR, September 9-12. 2003, Seiten 1-7 ist lediglich ein UWB-Radio-Verfahren bekannt geworden, bei dem eine bekannte UWB-Datenverbindung in Verbindung mit hochauflösenden Beschleunigungssensoren beschrieben wird. Ein Konzept der Änderung der Datenübertragung bei Ausfall der Funkverbindung lässt sich dieser Druckschrift nicht entnehmen.

Aus der US 2010/0007485 A1 lässt sich lediglich eine drahtlose Datenverbindung zwischen einem Einsatzleiter und einer im Einsatz befindlichen Person entnehmen.

Es ist zwar ein fußgebundener Sensor vorhanden, der mit Ultraschall arbeitet, jedoch lässt sich aus dieser Druckschrift nicht entnehmen, dass bei Störung der Datenverbindung auf die Ortung mittels einer personenbezogenen Sensoranordnung übergegangen wird.

Aus der US 2012/0286933 A1 lässt sich entnehmen, dass unterschiedliche Einsatzebenen mit außerhalb eines Gebäudes vorhandenen Referenzstationen dadurch gewählt werden, dass die Referenzstationen an luftgestützten Ballons angebracht sind und die Ballons mit der daran angebrachten Referenzstation auf unterschiedliche Höhen, parallel zu den Einsatzebenen, außerhalb des Gebäudes gebracht werden. Bei der vorliegenden Erfindung werden jedoch die verschiedenen Einsatzebenen durch auf der jeweiligen Einsatzebene im Haus abgesetzten Referenzstationen referenziert und nicht in nicht-praktikabler Weise durch außerhalb des Gebäudes angeordnete, luftgestützt getragene Referenzstationen.

Der Erfindung liegt deshalb die Aufgabe zugrunde, ein Verfahren und ein System zur Ortung von Personen in unübersichtlichen Umgebungen, insbesondere in Gebäuden oder in anderen Katastrophengebieten so weiterzubilden, dass mit einfacheren Mitteln eine genaue Ortung von Personen in dieser unterschiedliche Einsatzebenen umfassenden Umgebung möglich ist, wobei der Einsatzort und die Bewegung einer Einsatzperson auf besonders sichere und unterbrechungsfreie Art erfasst und überwacht werden soll..

Zur Lösung der gestellten Aufgabe ist die Erfindung durch die technische Lehre des Anspruches 1 oder des Anspruchs 4 gekennzeichnet.

Merkmal der Erfindung ist, dass - nach dem ersten Merkmal des kennzeichnenden Teils - die Einsatzperson auf der Einsatzebene der Satellitenstation am Eintrittsort der Einsatzperson auf dieser Einsatzebene absetzt.

Dies bedeutet, dass die Satellitenstation, welche die Einsatzperson mit sich führt, stets am Eintrittsort der Einsatzperson auf dieser Einsatzebene absetzt. Dies setzt voraus, dass auf jeder Einsatzebene der Einsatzperson eine solche Satellitenstation abgesetzt wird, was eine besonders sichere Datenverbindung bedeutet. Dies bedeutet nämlich, dass jeweils nur auf einer einzigen Einsatzebene in einer bestimmten Höhe die Datenverbindung zwischen der Einsatzperson und der dort abgesetzten Satellitenstation in einer horizontalen Ebene erfolgt.

Es wird also die schräge Funkverbindung, wie sie beispielsweise aus dem Stand der Technik bekannt ist, vermieden. Hier setzt die Erfindung ein, die vorsieht, dass die Einsatzperson nunmehr immer die Satellitenstation auf seiner Einsatzebene absetzt, was mit dem Vorteil verbunden ist, dass eine besonders sichere Funkverbindung auf dieser Einsatzebene vorliegt, denn diese Funkverbindung ist lediglich in einer horizontalen Ebene vorhanden und muss nicht in schräge Richtung durch Deckenwände eines zu überwachenden Gebäudes hindurch geführt werden.

Weiteres Merkmal ist, dass nunmehr auch ein weiterer Sensor zur Ermittlung der Schrittlänge vorgesehen ist.

Die Ermittlung der Schrittlänge erfolgt aus dem Grund, dass bei dem Ausfall der Datenverbindung, wie sie im Oberbegriff des geltenden Anspruches 1 angegeben ist und beim Übergang zu einer UWB-Datenverbindung es nunmehr nicht mehr möglich ist, diese Person auf ihrer Einsatzebene genau zu orten. Hier setzt die Erfindung ein, die nunmehr vorsieht, dass durch Ermittlung der Schrittlänge der Abstand der Einsatzperson von der Satellitenstation erfasst wird, um so - indirekt - den Aufenthaltsort der Einsatzperson auf der jeweiligen Einsatzebene mit hoher Genauigkeit zu erfassen.

Der Erfindung liegt der weitere Vorteil zugrunde, dass nun pro Einsatzebene jeweils eine Einsatzperson eine Satellitenstation absetzen kann und dass somit eine unabhängige Ortung über mehrere Satellitenstationen auf unterschiedlichen Ansatzebenen für unterschiedliche Einsatzpersonen möglich ist.

An der zu ortenden Einsatzperson wird demnach mindestens eine mobile Einheit mitgeführt, die geeignet ist, eine UWB-Datenverbindung zwischen der Einsatzperson und einer Referenzstation außerhalb der unübersichtlichen Umgebung herzustellen, dass ferner die mobile Sende- und Empfangseinheit an der Einsatzperson geeignet ist, mindestens im Radio-Betrieb zu senden und gegebenenfalls zu empfangen und dass ferner mit der zu ortenden Einsatzperson mindestens ein Schrittsensor zur Ermittlung der Schrittlänge, ein Sensor zur Ermittlung der Schrittrichtung und ein Höhenmesser mitgeführt werden.

Mit der gegebenen technischen Lehre ergibt sich der wesentliche Vorteil, dass nun die Ortung einer zu ortenden Einsatzperson nicht mehr über eine Triangulationsmessung stattfindet, sondern über Sensoren, die an dem Körper der Einsatzperson befestigt sind.

Die Erfindung geht hierbei davon aus, dass, wenn an der Einsatzperson Sensoren für die Ermittlung der Schrittlänge, der Richtung (z. B. über ein Gyroskop) und über ein Höhenmesser stattfindet, zu jedem Zeitpunkt der Laufweg der Person, die Höhe der Person über Grund, die Zeit der Gehbewegung und andere Ortungsdaten erfasst werden können, ohne dass die Ortung auf außerhalb des Gebäudes liegende Extrastationen verlagert wird.

Damit wird die Ortung von Einsatzpersonen wesentlich vereinfacht, denn es wird auf die Sensoren abgestellt, die an der Einsatzperson befestigt sind und nicht auf außerhalb des Gebäudes angeordnete, störungsempfindliche Mobilstationen, die erst im Katastrophenfall aufgestellt oder im Gebäude angebracht werden müssen. Die relativ ungenaue Triangulationsmessung wird bei der vorliegenden Erfindung demnach durch eine Sensorauswertung von an der Einsatzperson angeordneten Sensoren ersetzt, die jeweils zu bestimmten Zeitpunkten ihre Sensorsignale an die Referenzstationen senden und die Referenzstation hat eine Datenverbindung mit einem Einsatzrechner, wo die Daten ausgewertet werden. Es bedarf also lediglich mehrerer Sensoren, die an einer Einsatzperson angeordnet sind, ferner bedarf es einer Datenverbindung zwischen der Einsatzperson und der außerhalb des Gebäudes angeordneten Referenzstation und eine Datenverbindung zwischen der Referenzstation und einem außerhalb des Gebäudes angeordneten Einsatzrechner.

Es hat sich nun herausgestellt, dass im Katastrophenfall die UWB-Link-Verbindung versagen kann. Hier sieht die Erfindung vor, dass, wenn die UWB-Link-Verbindung abbricht, dann erfindungsgemäß nach dem Verfahren der Erfindung auf einen Radio-Betrieb umgeschaltet wird.

Unter Radio-Betrieb wird ein Sendebetrieb verstanden, wie er beispielsweise in der genannten US 2012/0025977 A1 beschrieben ist. Es handelt sich hierbei um Funkwellen, die bevorzugt von dem heute üblichen Digitalfunk Gebrauch machen. Es kann sich aber auch um analoge Radiowellen handeln, die geeignet sind, sehr dicke und weit entfernte Objekte zu durchdringen. Beispielsweise ist es bekannt, im Radio-Betrieb im Bereich der Mittelwellen oder Langwellen zu senden, wobei bekannterweise Langwellen im Analogbereich sogar die gesamte Erde umspannen können und einen Funk über sehr große Entfernungen erlauben.

Es handelt sich hier nur um beispielhafte Angaben; weil im Mittelpunkt der vorliegenden Erfindung steht, dass bei Abbruch der sehr guten und schnellen UWB-Sende- und UWB-Empfangsverbindung nunmehr auf Radio-Betrieb umgeschaltet wird.

Die Ortung der zu ortenden Person erfolgt vorzugsweise dadurch, dass die zu ortende Person beim Betreten eines Gebäudes oder eines unübersichtlichen Geländes an eine genau definierten, am Einsatzfahrzeug lokalisierten Position eine Satellitenstation absetzt, mit der die zu ortende Person die gesamte Einsatzzeit die UWB-Datenverbindung aufrecht erhält.

Wichtig ist demnach, dass die zu ortende Person oder die zu sichernde Person nicht mit der außerhalb befindlichen Referenzstation einen Datenverkehr unterhält, sondern dieser Datenverkehr mit der Referenzstation nur kurzfristig erfolgt, um eine anfängliche Dateninitialisierung an der von der Einsatzperson mitgeführten mobilen Einheit zu ermöglichen.

Sobald die erforderlichen Daten übertragen sind, erfolgt die weitere Datenübertragung zwischen der Person und der von der Person an einer definierten Stelle abgesetzten Satellitenstation.

Jede Einsatzperson soll eine solche Satellitenstation mit sich führen und an ihrem Einsatzort auf der gleichen Höhe absetzen, wo die Einsatzperson zum Einsatz kommt.

Wenn beispielsweise in einem Brandfall eine Einsatzperson als Feuerwehrmann ein Gebäude betritt, ist dafür gesorgt, dass im Eingangsbereich des Gebäudes zunächst die Referenzstation abgesetzt wird und dann die Einsatzperson über ein oder mehrere Ebenen im Gebäude im Treppenhaus voranschreitet und beispielsweise auf einer Ebene 2 den Einsatzort betritt.

Wichtig ist, dass nun die von der Einsatzperson mitgeführte Satellitenstation an einer genau definierten Position auf der Arbeitsebene (Ebene 2) abgesetzt wird, so dass damit auch der genaue Ort der Satellitenstation der außerhalb befindlichen Referenzstation und damit auch dem Einsatzrechner bekannt ist.

In der Folge - während des Einsatzes dieser Einsatzperson - erfolgt nunmehr - vorzugsweise - ausschließlich der Datenverkehr zwischen der Einsatzperson und der auf der gleichen Ebene befindlichen Satellitenstation.

Um sicherzustellen, dass sich die Satellitenstation auf der gleichen Höhe wie die Einsatzperson befindet, ist in einer Weiterbildung der Erfindung vorgesehen, dass die Einsatzperson als weiteren Sensor einen Höhenmesser mit sich führt, der in der Lage ist, die Höhe des Einsatzgebietes der Einsatzperson über Grund und damit über der Referenzstation zu ermitteln. Auf diese Weise weiß der Einsatzrechner nun auch, dass sich die Satellitenstation auf der gleichen Ebene wie die Einsatzperson befindet, und es ist somit klargestellt, dass die Funkverbindung in horizontale Richtung in der Einsatzebene der Einsatzperson erfolgt.

Auf diese Weise kann zu jedem beliebigen Zeitpunkt der Aufenthaltsort der Einsatzperson auf der Einsatzebene festgestellt werden, denn über die Datenfunkverbindung zwischen der mobilen Einheit der Einsatzperson und der auf gleicher Ebene befindlichen Satellitenstation erfolgt ein Funkverkehr zu der Referenzstation, und der augenblickliche Aufenthaltsort kann jederzeit festgestellt werden.

Es hat sich nun herausgestellt, dass die UWB-Datenverbindung sehr zuverlässig funktioniert. Wenn jedoch größere Entfernungen zwischen der mobilen Einheit an der Einsatzperson und der auf gleicher Ebene befindlichen Satellitenstation zu bewältigen sind und dazwischen noch Gegenstände, Störfelder, Wände und dergleichen störende Objekte liegen, kann es vorkommen, dass die Funkverbindung zwischen der Einsatzperson und der auf gleicher Ebene operierenden Satellitenstation abbricht. Hier setzt die Erfindung ein, die vorsieht, dass beim Abbrechen der UWB-Link-Verbindung nunmehr die mobile Einheit an der Einsatzperson und auch die Satellitenstation auf Radio-Betrieb umschalten.

Sowohl die mobile Einheit an der Einsatzperson sendet Radiowellen an die Referenzstation mit Angabe der letzten Position der mobilen Einheit und auch die Satellitenstation sendet Radiowellen an die Referenzstation mit Angabe der letzten Position der Satellitenstation mit den weiteren Angaben, aber auch die letzte ermittelte Schrittlänge, Schrittrichtung, die Höhe, die Zeit und die Laufrichtung der Person.

Auf diese Weise kann auch bei Ausfall der UWB-Datenverbindung der letzte noch bekannte Aufenthaltsort der Einsatzperson festgestellt werden.
Es wird nun vorausgesetzt, dass sich die Einsatzperson weiter bewegt und möglicherweise in einer Notfallsituation schwebt, dass sie beispielsweise zu Boden gefallen ist, verletzt ist und dergleichen mehr.

Es geht nun erfindungsgemäß darum, ausgehend von dem letzten bekannten Aufenthaltsort der Einsatzperson, nunmehr den Unfallort der Einsatzperson zu erkennen und einen Rettungsweg zu konstruieren.

Dies erfolgt erfindungsgemäß dadurch, dass die mit der Einsatzperson mitgeführten Sensoren unmittelbar im weitreichenden Radio-Betrieb direkt an die Referenzstation senden.

Die Satellitenstation hat an und für sich keinen weiteren Sendebetrieb mehr mit der Einsatzperson. Es kann jedoch in einer Weiterbildung der Erfindung vorgesehen sein, dass die Einsatzperson entweder versucht, eine UWB-Verbindung mit der DU herzustellen oder im Radio-Betrieb mit der DU einen Funkverkehr aufnehmen. Dies ist jedoch nicht lösungsnotwendig, denn in einer anderen Ausgestaltung kann es vorgesehen sein, dass die DU überhaupt nicht mehr sendet oder gegebenenfalls nur noch als Verstärker für die Sendesignale der Einsatzperson dient, um die gleichen Signale, wie sie von der Einsatzperson über Radio-Betrieb an die Referenzstationen gesendet werden, nochmals an die Referenzstation sendet.

Es kommt also in diesem Katastrophenfall nur noch bedingt auf den Funkverkehr der Satellitenstation an, weil vornehmlich der Radio-Betrieb zwischen der Einsatzperson und der Referenzstation aufrecht erhalten bleibt.

In diesem Notfall werden demzufolge ausgehend von dem bekannten letzten Aufenthaltsort der Einsatzperson nun die weiteren Daten bezüglich Schrittlänge, Laufrichtung, Höhe des Einsatzortes und andere Sensordaten an die Referenzstation gesendet, diese ermittelt die empfangenen Daten über eine Datenverbindung an den Einsatzrechner, der auf einem grafischen Display sowohl in der Draufsicht als auch in der Vorderansicht die Ebenen des Gebäudes und in der Draufsicht den aktuellen Aufenthaltsort der verunfallten Einsatzperson darstellt und gleichzeitig auch optisch den notwendigen Rettungsweg darstellt.

Wichtig bei der vorliegenden Erfindung ist also, dass im Notfall auf Radio-Betrieb umgeschaltet wird, dass aber die an der Einsatzperson mitgeführten Sensoren ausgehend von dem letzten bekannten Aufenthaltsort nunmehr die Schrittlänge, Laufrichtung, Höhe und andere Daten direkt im Radio-Betrieb an die Referenzstation senden, um so den Notaufenthaltsort der zu ortenden Einsatzperson festzustellen.

Hierbei kann es in einer Weiterbildung der Erfindung vorgesehen sein, dass an der Einsatzperson noch weitere Sensoren mitgeführt werden, insbesondere Drucksensoren, die z. B. im Kniebereich, im Ellenbogenbereich oder dergleichen an der Einsatzperson angeordnet sind, um durch Auswertung der Signale dieser Drucksensoren festzustellen, ob die Einsatzperson auf dem Boden liegt, kniet oder robbt oder dergleichen Bewegungen ausführt. Es kann also ein umfassendes Bewegungsbild der Einsatzperson über eine entsprechende Anzahl von an der Einsatzperson befestigten Sensoren vorgenommen werden.

Selbstverständlich ist es auch möglich, noch weitere Signale von der Einsatzperson zu übertragen, z. B. die Signale einer Helmkamera, Signale von Temperatur- und Feuchtesensoren, die z. B. die Innentemperatur in der Schutzkleidung, aber auch die atmosphärischen Daten in der Umgebung der Einsatzperson feststellen, die Restluftmenge im Atemgerät und dergleichen mehr.

Ein bevorzugter Verfahrensablauf für die Durchführung des erfindungsgemäßen Verfahrens wird wie folgt dargestellt:

### Einsatzfall:

1. Herstellung UWB-Link zwischen MU und RS
2. Herstellung UWB-Link zwischen MU und DU
3. Übermittlung von MU an DU von ID, MAC, Zeit, Höhe, Schrittrichtung und Schrittlänge

### Unterbrechungsfall:

4. Umschaltung auf Radio-Signal von MU und DU auf RS, ggf. auch Radio-Verbindung zwischen MU und DU
5. MU übermittelt die mit UWB ermittelte letzte Position an RS
6. DU übermittelt Schrittlänge, Schrittrichtung, Höhe, Zeit an RS
7. Einsatzrechner ermittelt aus Daten von der RS den aktuellen Ort der MU
8. Einsatzrechner bildet den aktuellen Ort grafisch ab, berechnet Rettungsweg/Ebene, Höhe, Entfernung und zeigt grafisch den Rettungsweg

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert die an einer Einsatzperson mitgeführten Sensoren und Sende- und Empfangseinheiten
- Figur 2:: die Situation zu Beginn eines Rettungseinsatzes
- Figur 3:: die Situation während eines Rettungseinsatzes, bei dem noch die UWB-Verbindung zur Satellitenstation vorhanden ist
- Figur 4:: die Situation gemäß Figur 3 mit Angabe weiterer Einzelheiten
- Figur 5:: die Situation im Einsatzfall, wenn die Datenverbindung zwischen der mobilen Einheit und der Satellitenstation unterbrochen ist
- Figur 6:: Sende- und Empfangswege der Radioverbindung im Notfall
- Figur 7:: die grafische Darstellung der Ortung der Einsatzperson im Notfall

Die Figur 1 zeigt schematisiert eine Einsatzperson 1, die bekannterweise eine Schutzkleidung 2 trägt, die gegebenenfalls mit Atemschutzgeräten ausgerüstet ist. Die Einsatzperson 1 kann einen Helm 10 tragen und trägt geschützt in der Schutzkleidung, z. B. in einer Tasche 3, eine mobile Einheit 4, die nachfolgend auch als MU bezeichnet wird. Diese mobile Einheit ist geeignet, im Sende- und Empfangsbetrieb einen UWB-Link 12 zu einer später noch zu beschreibenden Referenzstation 20 aufrecht zu erhalten. Ferner ist diese mobile Einheit MU geeignet, einen UWB-Link 12 zu einer noch später zu beschreibenden Satellitenstation 30 aufrecht zu erhalten.

Wichtig bei der Figur 1 ist, dass die Einsatzperson 1 z. B. an den Schuhen oder im Bereich der Füße Sensoren 5, 6 trägt, die geeignet sind, die Schrittlänge 7 der Einsatzperson 1 zu jedem beliebigen Zeitpunkt festzustellen. Ferner trägt diese Einsatzperson die Schutzkleidung 2, einen Höhenmesser 8 und einen Kompass (z. B. Gyroskop), der die Bewegungsrichtung 50 der Einsatzperson zu jedem beliebigen Zeitpunkt in digitaler Form feststellt und in die mobile Einheit 4 einspeist.

Die mobile Einheit 4 wertet also zu jedem Zeitpunkt über die Daten der Sensoren 5, 6 zu ermittelnde Schrittlänge aus und ferner die Daten zur Ermittlung der Bewegungsrichtung und die Daten zur Ermittlung der Höhe der Einsatzperson 1 über dem Einsatzort, nämlich über der Referenzstation 20.

In Figur 1 ist auch noch dargestellt, dass die mobile Einheit 4, die geeignet ist, neben dem UWB-Link 12 auch eine Radio-Link-Verbindung 13 vorzusehen, die später noch beschrieben wird.

Es ist zweckmäßig, dass an der Einsatzperson 1 noch ein oder mehrere Drucksensoren 9 angeordnet sind, die dann Kontakt auslösen und ein Messsignal abgeben, wenn die Einsatzperson 1 z. B. auf dem Boden robbt, auf dem Boden liegt, kniet oder dergleichen mehr, um auch die Körperstellung der Einsatzperson 1 im Bereich des Einsatzgebietes zu dokumentieren und über die mobile Einheit 4 an die Referenzstation 20 zu senden.

Im Einsatzfall nach Figur 2 beginnt der Einsatz damit, dass die Einsatzperson 1 an ein Gebäude 14 herantritt und an einer genau definierten Eingangstür 15 eine Referenzstation 20 ablegt.

Wichtig ist, dass die genaue geografische Lage der Referenzstation 20 einschließlich deren Höhe festgestellt wird. Dies kann durch GPS oder andere Datenermittlung stattfinden oder über LORAN C, um eben die genaue aktuelle Stellung der Referenzstation 20 einschließlich deren Höhe festzustellen und zu dokumentieren. Es ist deshalb eine Datenverbindung 17 zwischen der Referenzstation 20 und einem Einsatzfahrzeug 18 vorhanden, wobei im Einsatzfahrzeug 18 bevorzugt ein Einsatzrechner 19 angeordnet ist, der mit einem grafischen Display 21 verbunden ist.

Selbstverständlich kann statt dem Einsatzfahrzeug 18 auch ein Einsatzrechner 19, der mit einem grafischen Display 21 verbunden ist, auch an einer anderen beliebigen Stelle angeordnet sein.

Es ist ferner eine Datenverbindung 16 zwischen der Referenzstation 20 und der mobilen Einheit 4 vorhanden, die im Bereich des UWB-Link-Sende- und Empfangsbetriebs mindestens die aktuelle Höhe der Einsatzperson 1 über der Referenzstation 20 zeigt, die ID-Nummer der mobilen Einheit und die MAC der mobilen Einheit der Referenzstation 20 mitteilt, so dass es sich hier um eine eindeutige identifizierbare mobile Einheit handelt, die zu jedem Zeitpunkt identifiziert werden kann.

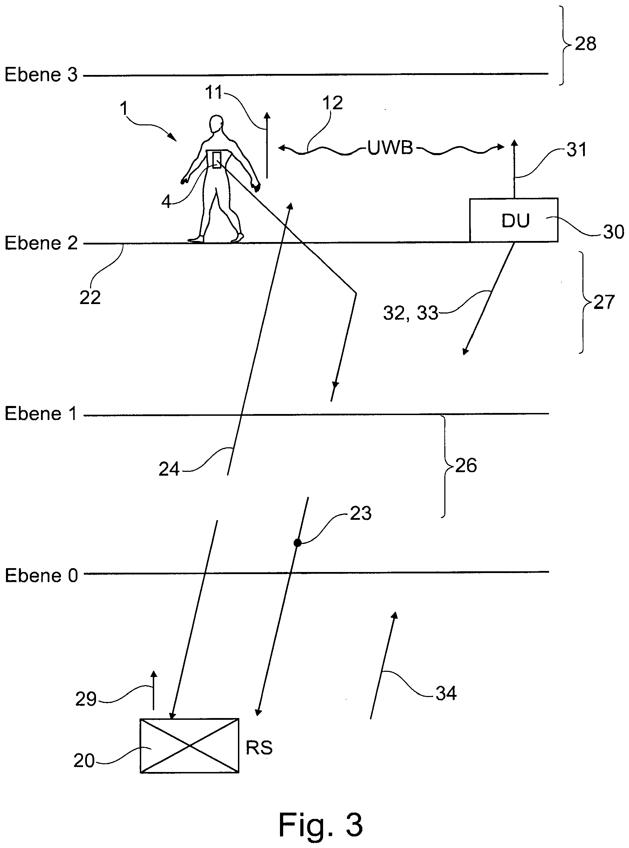

Die Figur 3 zeigt nun einen Einsatzfall, in der vorausgesetzt wird, dass die Einsatzperson 1 über ein Treppenhaus, welches genau aufgrund der geometrischen Lage im Gebäude lokalisierbar ist, auf die Einsatzebene 22 kommt und dort arbeitet.

Wichtig ist nun, dass die Einsatzperson 1 auf diese Einsatzebene 22 zunächst an einer genau lokalisierbaren Stelle eine Satellitenstation 30 absetzt. Es wird bevorzugt, wenn die Satellitenstation 30 bereits am Eintrittsort der Einsatzperson 1 auf der Einsatzebene 22 abgesetzt wird, z. B. direkt in der Zugangstür zur Einsatzebene 22, so dass der Ort, wo die Satellitenstation 30 abgesetzt wird, nunmehr festgelegt ist und von dem Einsatzrechner 19 bekannt ist.

Zum Zeitpunkt, wo die Einsatzperson 1 die Einsatzebene 22 betritt, wird ein Datenaustausch zwischen der mobilen Einheit 4 und der Referenzstation 20 durchgeführt, indem als erstes die mobile Einheit die Daten 26 übermitteln, z. B. die Höhe plus der Einsatzhöhe von 6 m beinhalten, die ID der mobilen Einheit, MAC, Zeit und möglicherweise auch die Sensordaten, die vorher beschrieben wurden, um die Art, den Laufweg, die Richtung und dergleichen der Einsatzperson 1 festzustellen.

Dies erfolgt über den Sendepfad 23, mit dem die Daten 26 mitgeteilt werden. Sobald die Referenzstation 20 die Daten 26 empfangen hat, wird ein Echosignal über den Sendepfad 24 an die mobile Einheit 4 ausgesendet und von dieser mobilen Einheit wieder über den Sendepfad 34 zurück zur Satellitenstation 30 gesendet, so dass damit die Entfernung zwischen der Einsatzperson 1 und der Satellitenstation 30 festgestellt wird. Es erfolgt also einmalig eine Laufzeitmessung, um beim Beginn des Einsatzes der Einsatzperson 1 in der Einsatzebene 22 die aktuelle Entfernung festzustellen.

Es kann natürlich in einer anderen Ausführungsform vorgesehen werden, dass diese Entfernungsmessung mehrfach stattfindet, was insbesondere dann wichtig ist, wenn beispielsweise die Referenzstation 20 über Grund verschoben wird.

Wichtig ist jedenfalls, dass die Satellitenstation über einen eigenen Sendepfad 33 nunmehr eine UWB-Datenverbindung 32 mit der Referenzstation 20 aufnimmt und beibehält, ohne dass die Einsatzperson 1 mit ihrer mobilen Einheit 4 diese UWB-Verbindung hat.

Dies ist ein wesentlicher Vorteil gegenüber dem Stand der Technik, denn beim Stand der Technik musste stets die Einsatzperson eine UWB-Link-Verbindung zu der Referenzstation vorsehen, was nur auf sehr kurze Entfernung störungsfrei geschieht.

Hier ist ein erstes wichtiges Merkmal der Erfindung, die vorsieht, dass die Satellitenstation 30 auf gleicher Ebene wie die Einsatzperson 1 angeordnet ist, so dass damit schon gesorgt ist, dass keine Zwischendecken oder andere störende Objekte die UWB-Link-Verbindung 12 stören.

Damit ist auch der Einsatz in Hochhäusern gewährleistet, was bei dem Gegenstand nach dem Stand der Technik nicht gewährleistet war, weil bei größeren Gebäuden stets die dort befindlichen Zimmerwände und Decken eine Triangulationsmessung verhinderten.

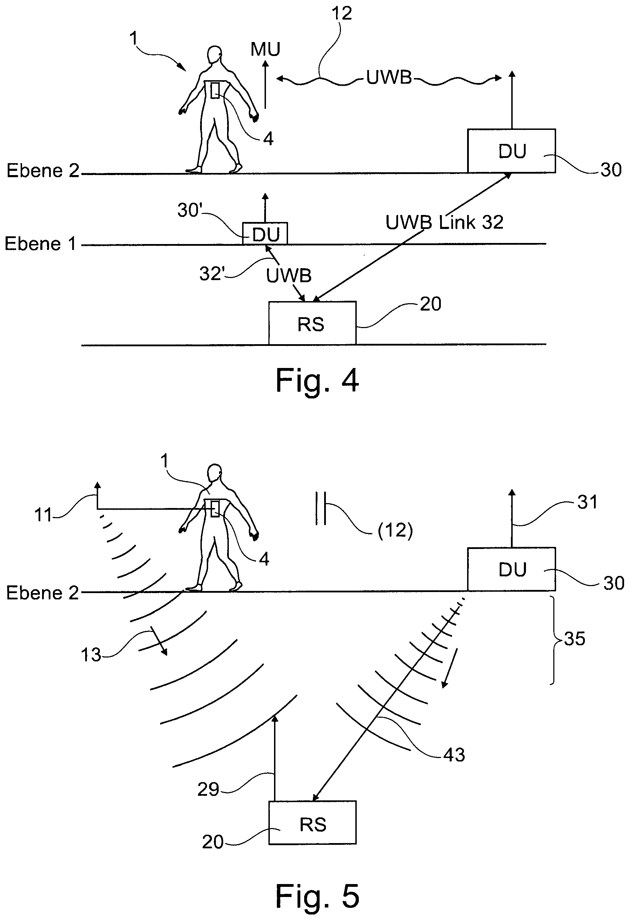

Die Figur 4 zeigt nun den Einsatzfall gemäß Figur 3, die zeigt, dass ausgehend von der Antenne 11 der mobilen Einheit 4 nun ein dauernder UWB-Link 12 zu der auf gleicher Ebene abgestellten Satellitenstation 30 vorhanden ist.

Im UWB-Link 32 erfolgt ein dauernder Datenaustausch mit der Referenzstation 20.

Es ist dargestellt, dass jede Einsatzperson eine eigene Satellitenstation mit sich führt und auf dem Ort der Einsatzebene absetzt. So ist in Figur 4 dargestellt, dass eine andere, nicht näher dargestellte Einsatzperson eine ihm zugeordnete Satellitenstation 30' auf der Ebene 1 absetzt, die dann einen gleichen UWB-Link 32' zur Referenzstation 20 aufrecht erhält. Es können also eine Vielzahl von Satellitenstationen 30, die jeweils bevorzugt eine Einsatzperson und einer mit dieser mitgeführten mobilen Einheit 4 zugeordnet ist, auf verschiedenen Ebenen des Gebäudes 14 verwendet werden.

Die Figur 5 zeigt nun den sogenannten Notfall, der dadurch entsteht, dass in nicht gewünschter Weise der UWB-Link 12 zwischen der mobilen Einheit 4 und der auf gleicher Ebene operierenden Satellitenstation 30 abbricht. In diesem Fall schaltet erfindungsgemäß die mobile Einheit auf Radio-Betrieb um und sendet über den Radio-Link 13 die letzte Position der mobilen Einheit an die Referenzstation 20. Zu diesen letzten Positionsdaten gehören alle Sensordaten und alle sonstigen Daten, die eine eindeutige Identifizierung des letzten Aufenthaltsortes der Einsatzperson gestatten.

Gleichzeitig schaltet auch die Satellitenstation 30 auf Radio-Betrieb über den Radio-Link 43 über, so dass die Antenne 31 sowohl für den UWB-Link 32 als auch für den Radio-Link 43 verwendet werden kann, und es wird über die Radio-Link-Verbindung 43 die von der verunglückten Einsatzperson 1 noch erfasste ermittelte Schrittlänge, die Höhe, die Zeit, die Laufrichtung und alle notwendigen Sensorsignale als Datenpaket 35 an die Referenzstation 20 übertragen.

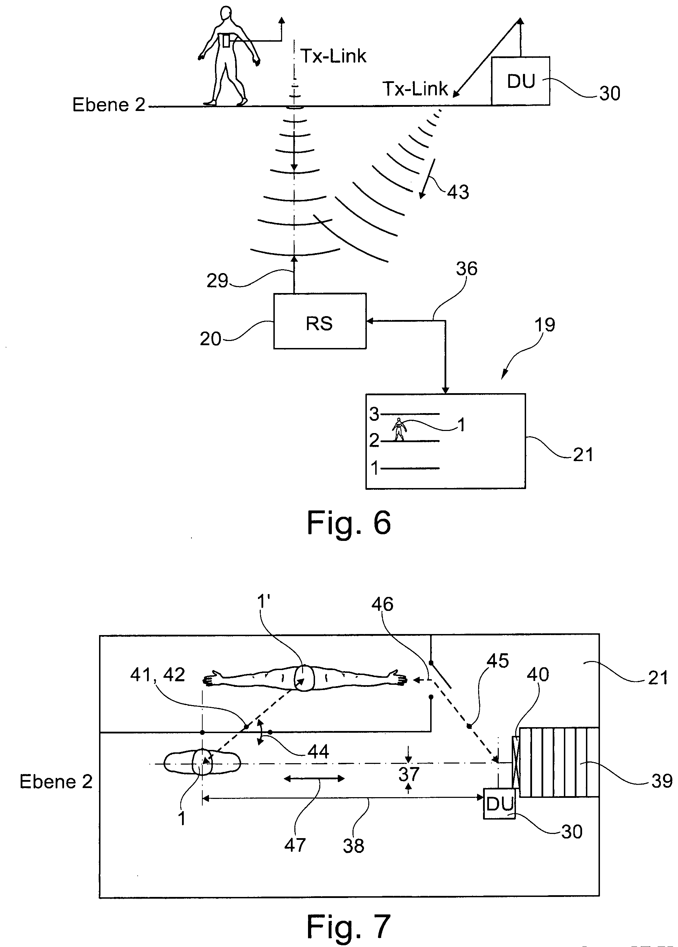

Dieser Notfall ist in Figur 6 grafisch dargestellt. Dort ist erkennbar, dass über den Radio-Link 13 auf die Antenne 29 der Referenzstation 20 die Radiodaten übertrage werden und gleichzeitig über den Radio-Link 43 von der Satellitenstation 30 die noch ermittelten weiteren Daten (Schrittlänge, Höhe, Zeit, Laufrichtung, Sensordaten) an die Referenzstation 20 übertragen werden. Über die Datenverbindung 36 werden diese Daten in dem Einsatzrechner ausgewertet und auf einem grafischen Display 21 dargestellt. Die Figur 6 zeigt nun den letzten, bekannten Aufenthaltsort der Einsatzperson 1.

Nun geht es gemäß Figur 7 darum, zu rekonstruieren, in welcher Weise sich die verunglückte Einsatzperson 1 von ihrem noch bekannten Einsatzort entfernt hat, um einen Rettungsweg zu konstruieren.

Die Figur 7 zeigt zunächst, dass im Bereich eines Treppenhauses 39 an der dort befindlichen Tür 40 die Satellitenstation 30 abgesetzt wurde und der noch letzte bekannte Aufenthaltsort wird durch den Abstand 37 und den weiteren Abstand 38 eindeutig identifiziert, so dass eine X-Y-Koordinate für den letzten bekannten Aufenthaltsort der Einsatzperson 1 gegeben ist.

Nunmehr ist vorgesehen, dass die verunglückte Einsatzperson über ihre mobile Einheit MU die Daten bezüglich der Schrittlänge, der Höhe, der Laufrichtung und alle Sensordaten weiterhin an die Referenzstation übermittelt, so dass diese nun weiß, wie viel Schritte, in welcher Richtung, in welcher Höhe die verunglückte Einsatzperson in Richtung auf den Notweg 41 unternommen hat.

Es kann der Notweg 41, der nicht dokumentiert ist, eindeutig festgelegt werden, denn über die Anzahl der Schritte, die Schrittlänge, die Schrittrichtung und die Sensordaten kann somit der Notweg, d. h. der Weg, der ermittelt werden muss und um den sich die Einsatzperson 1 zu dem Unfallort der Einsatzperson 1' begeben hat, festgestellt werden.

Beispielsweise zeigt die Figur 7, dass hier ein Rettungsweg 42 gegeben ist, in dem eine Tür 44 aus dem Einsatzplan bekannt ist, über den die verunglückte Person 1' evakuiert werden kann.

Alternativ wird auf dem grafischen Display 21 auch ein alternativer Rettungsweg 45 dargestellt, weil grafisch angezeigt wird, dass eine weitere Tür 46 vorhanden ist, über welche die verunglückte Einsatzperson 1' ebenfalls evakuiert werden kann.

Ausgehend von dem bekannten und dokumentierten Laufweg 47 der Einsatzperson 1 wird somit von dem aktuell letzt bekannten Aufenthaltsort der Einsatzperson 1 der Notweg berechnet, und zwar über die an der Einsatzperson 1 befestigten Sensoren, um so den aktuellen Aufenthaltsort der verunglückten Einsatzperson 1' zu rekonstruieren und den hieraus zu berechnenden Notweg 41 festzulegen.

### Zeichnungslegende

- 1: Einsatzperson 1'
- 2: Schutzkleidung
- 3: Tasche
- 4: Mobile Einheit MU
- 5: Sensor
- 6: Sensor
- 7: Schrittlänge
- 8: Höhenmesser
- 9: Druckmesser
- 10: Helm
- 11: Antenne
- 12: UWB-Link
- 13: Radio-Link
- 14: Gebäude
- 15: Eingangstür
- 16: Datenverbindung
- 17: Datenverbindung
- 18: Einsatzfahrzeug
- 19: Einsatzrechner
- 20: Referenzstation (RS)
- 21: grafisches Display
- 22: Einsatzebene (2)
- 23: Sendepfad (von MU-RS)
- 24: Sendepfad (von RS-MU)
- 25: Sendepfad
- 26: Daten
- 27: Daten
- 28: Daten
- 29: Antenne (von 20)
- 30: Satellitenstation (DU)
- 31: Antenne (von 30)
- 32: UWB-Link (von 30)
- 33: Sendepfad (DU-RS)
- 34: Sendepfad (RS-DU)
- 35: Daten
- 36: Datenverbindung
- 37: Abstand
- 38: Abstand
- 39: Treppenhaus
- 40: Tür
- 41: Notweg (zu ermittelnde)
- 42: Rettungsweg
- 43: Radio-Link (von DU)
- 44: Tür
- 45: Rettungsweg
- 46: Tür
- 47: Laufweg (dokumentiert)
- 48:
- 49:
- 50: Bewegungsrichtung

## Patentansprüche

1. System zur Ortung von Personen (1, 1') innerhalb eines zu überwachenden Bereichs (14) mit mehreren Sende- und Empfangsgeräten (4, 19, 20, 30), von denen mindestens ein Gerät (4) an der zu ortenden Einsatzperson (1, 1') angebracht ist und mindestens ein Gerät außerhalb des zu überwachenden Bereichs (14) in Form eines Einsatzrechners (19) vorgesehen ist und ein weiteres Gerät als Satellitenstation (30) ausgebildet ist, wobei die Geräte (4, 19, 20, 30) über Datenfunkverbindungen (12, 13, 16, 17, 23, 24, 25, 32, 36, 43) miteinander kommunizieren, wobei die Datenfunkverbindung (12, 32) zwischen den Geräten (4, 20, 30) eine anfängliche UWB-Datenverbindung (12, 32) ist und bei Unterbrechung der UWB-Datenverbindung (12) zwischen der mobilen Sende- und Empfangseinheit (4) an der Einsatzperson (1, 1') und der Satellitenstation (30) die mobile Sende- und Empfangseinheit (4) geeignet ist, alternativ zur UWB-Datenverbindung (12) im Radio-Betrieb (13) an das als Referenzstation ausgebildete Sende- und Empfangsgerät (20) zu senden und/oder zu empfangen, wobei die Einsatzperson (1, 1') mindestens einen weiteren Sensor (5, 6, 8, 9) am Körper trägt, der mindestens das Bewegungsprofil und/oder den Zustand der Einsatzperson (1, 1') erfasst und mindestens an die mobile Sende- und Empfangseinheit (4) an der Einsatzperson (1, 1') überträgt, welche diese Daten weiter übermittelt, **dadurch gekennzeichnet, dass** die Satellitenstation (30) von der Einsatzperson (1) am Eintrittsort der Einsatzperson (1) auf einer Einsatzebene (22) auf dieser Einsatzebene (22) absetzbar ausgebildet ist, und ein dauernde UWB-Datenverbindung (12) zwischen der mobilen Sende- und Empfangseinheit (4) und der auf gleicher Ebene abgestellten Satellitenstation (30) vorhanden ist, und dass ein weiterer Sensor ein Schrittsensor (5, 6) ist, der zur Ermittlung der Schrittlänge (7) und/oder zur Ermittlung der Schrittrichtung und/oder zur Ermittlung der Höhe geeignet ist, und die ermittelten Sensordaten als Entfernungsdaten der Einsatzperson (1) von der abgesetzten Satellitenstation (30) in das mobile Gerät (4) einspeist,
wobei zum Zeitpunkt, zu dem die Einsatzperson (1) die Einsatzebene (22) betritt, eine Datenverbindung (23) für ein Datenaustausch zwischen der mobilen Einheit (4) und der Referenzstation (20) eingerichtet ist, wobei die mobile Einheit (4) ausgebildet ist, um als erstes die Daten (26), welche die Höhe der Referenzstation RS (20) plus der Einsatzhöhe beinhalten, zu übermitteln, ferner die ID der mobilen Einheit, MAC, Zeit und die Sensordaten, um die Art, den Laufweg, die Richtung und dergleichen der Einsatzperson (1) festzustellen, und dass die Satellitenstation (30) zur Aufnahme und Beibehaltung einer UWB-Datenverbindung (32) mit der Referenzstation (20) ausgebildet ist.

2. System nach Anspruch 1, **dadurch gekennzeichnet, dass** der weitere Sensor ein Drucksensor (9) ist, der geeignet ist, festzustellen, ob die Einsatzperson auf dem Boden liegt, kniet oder robbt oder dergleichen Bewegungen ausführt und die Sensordaten in das mobile Gerät (4) einspeist.

3. System nach Anspruch 1 oder 2, **dadurch gekennzeichnet, dass** zwischen der Satellitenstation (30) und der Referenzstation (20) wahlweise eine UWB-Datenverbindung (32) oder eine Radio-Link-Verbindung (43) besteht.

4. Verfahren zur Verwendung des Systems nach Anspruch 1, **dadurch gekennzeichnet, dass** in einem Einsatzfall folgende Schritte ablaufen:
a. die Einsatzperson (1) setzt auf der Einsatzebene (22) die Satellitenstation (30) am Eintrittsort der Einsatzperson (1) auf dieser Einsatzebene (22) ab,
b. zum Zeitpunkt, wo die Einsatzperson (1) die Einsatzebene (22) betritt, wird ein Datenaustausch zwischen der mobilen Einheit (4) und der Referenzstation (20) durchgeführt, indem als erstes die mobile Einheit (4) die Daten (26), welche die Höhe der Referenzstation RS (20) plus der Einsatzhöhe beinhalten, übermittelt, ferner die ID der mobilen Einheit, MAC, Zeit und die Sensordaten, um die Art, den Laufweg, die Richtung und dergleichen der Einsatzperson (1) festzustellen.
c. Herstellung UWB-Sendepfad (23) zwischen der mobilen Einheit (4) und der Referenzstation (20)
d. Herstellung UWB-Link (12) zwischen der mobilen Einheit (4) und einer Satellitenstation (30)
e. Übermittlung von ID, MAC, Zeit, Höhe, Schrittrichtung und Schrittlänge der mobilen Einheit (4) an Satellitenstation (30)
f. Herstellen und Beibehalten einer UWB-Datenverbindung (32) zwischen der Satellitenstation (30) und der Referenzstation (20).

5. Verfahren nach Anspruch 4, **dadurch gekennzeichnet, dass** im Verfahrensschritt c. nur ein einmaliger und kurzzeitiger Datenverkehr zwischen Referenzstation (20) und mobiler Einheit (4) zur anfänglichen Dateninitialisierung der mobilen Einheit (4) gegeben ist

6. Verfahren nach Anspruch 4, **dadurch gekennzeichnet, dass** bei Unterbrechung der UWB-Datenübertragung zwischen der mobilen Einheit (4) und der Satellitenstation (30) folgende weitere Verfahrensschritte ablaufen:
a. Umschaltung der Datenverbindung auf Radio-Signal zwischen mobiler Einheit (4) und Referenzstation (20)
b. die mobile Einheit (4) übermittelt die mit UWB ermittelte letzte Position an die Referenzstation (20)
c. die Satellitenstation (30) übermittelt ID, MAC, Zeit, und die letzte erfasste Höhe, Schrittrichtung und Schrittlänge der Einsatzperson (1, 1') an die Referenzstation (20)e. der Einsatzrechner (19) ermittelt aus den Daten der Referenzstation (20) den aktuellen Ort der Einsatzperson (1, 1') und der von ihr mitgeführten mobilen Einheit (4)f. der Einsatzrechner (19) bildet den aktuellen Ort der Einsatzperson (1, 1') grafisch ab, berechnet Rettungsweg/Ebene, Höhe, Entfernung und zeigt grafisch den Rettungsweg an.

7. Verfahren nach Anspruch 6, **dadurch gekennzeichnet, dass** im Verfährensschritt a. und b. die mobile Einheit (4) Radiowellen an die Referenzstation (20) mit Angabe der letzten Position der Einsatzperson sendet, und dass im Verfahrensschritt c. die Satellitenstation (30) ebenfalls Radiowellen an die Referenzstation (20) mit Angabe der letzten Position der Einsatzperson (1, 1') und weiteren Angaben, nämlich die letzte ermittelte Schrittlänge (7), Schrittrichtung, Höhe der Einsatzperson über Grund, Zeit und die Laufrichtung der Einsatzperson sendet.

8. Verfahren nach einem der Ansprüche 4 bis 7, **dadurch gekennzeichnet, dass** der Einsatzrechner (19) auf einem grafischen Display (21) sowohl in der Draufsicht als auch in der Vorderansicht die Einsatzebenen (22) des Gebäudes (14) und in der Draufsicht den aktuellen Aufenthaltsort der verunfallten Einsatzperson (1, 1') und einen Rettungsweg (42) darstellt.

## Claims

1. System for locating persons (1, 1') within a region (14) to be monitored using several transmitting and receiving devices (4, 19, 20, 30), of which at least one device (4) is attached to the operative person (1, 1') to be located and at least one device in the form of a duty computer (19) is provided outside of the region (14) to be monitored and a further device is designed as a satellite station (30), wherein the devices (4, 19, 20, 30) communicate with one another via data radio links (12, 13, 16, 17, 23, 24, 25, 32, 36, 43), wherein the data radio link (12, 32) between the devices (4, 20, 30) is an initial UWB data link (12, 32) and when the UWB data link (12) between the mobile transmitting and receiving unit (4) on the operative person (1, 1') and the satellite station (30) is interrupted, the mobile transmitting and receiving unit (4) is suitable, alternatively to the UWB data link (12), to transmit and/or to receive in radio operation (13) to the transmitting and receiving device (20) designed as a reference station, wherein the operative person (1, 1') carries at least one further sensor (5, 6, 8, 9) on the body which records at least the movement profile and/or the state of the operative person (1, 1') and transmits at least to the mobile transmitting and receiving unit (4) on the operative person (1, 1') which conveys this data further, **characterised in that** the satellite station (30) is designed to be able to be put down on an operative plane (22) by the operative person (1) at the point of entry of the operative person (1) on this operative plane (22), and a permanent UWB data link (12) between the mobile transmitting and receiving unit (4) and the satellite station (30) placed on the same plane is present, and **in that** a further sensor is a step sensor (5, 6) which is suitable for determining the step length (7) and/or for determining the step direction and/or for determining the height, and feeds the sensor data determined as distance data of the operative person (1) from the put-down satellite station (30) into the mobile device (4), wherein at the point in time at which the operative person (1) enters the operative plane (22), a data link (23) is set up for data exchange between the mobile unit (4) and the reference station (20), wherein the mobile unit (4) is designed to convey first of all the data (26), which comprises the height of the reference station RS (20) plus the operative height, furthermore, the ID of the mobile unit, MAC, time and the sensor data in order to establish the type, the path, the direction and the like of the operative person (1), and **in that** the satellite station (30) is designed to take up and retain a UWB data link (32) with the reference station (20).

2. System according to claim 1, **characterised in that** the further sensor is a pressure sensor (9) which is suitable to establish whether the operative person is lying on the floor, is kneeling or crawling or executing similar movements and feeds the sensor data into the mobile device (4).

3. System according to claim 1 or 2, **characterised in that** either a UWB data link (32) or a radio link connection (43) exists between the satellite station (30) and the reference station (20).

4. Method for using the system according to claim 1, **characterised in that** in one application the following steps proceed:
a. the operative person (1) puts down on the operative plane (22) the satellite station (30) at the point of entry of the operative person (1) on this operative plane (22),
b. at the point in time when the operative person (1) enters the operative plane (22), data exchange is carried out between the mobile unit (4) and the reference station (20), **in that** first of all the mobile unit (4) conveys the data (26), which comprises the height of the reference station RS (20) plus the operative height, furthermore the ID of the mobile unit, MAC, time and the sensor data to establish the type, the path, the direction and the like of the operative person (1),
c. production of UWB transmitting path (23) between the mobile unit (4) and the reference station (20),
d. production of UWB link (12) between the mobile unit (4) and a satellite station (30),
e. conveying ID, MAC, time, height, step direction and step length of the mobile unit (4) to satellite station (30),
f. production and retention of a UWB data link (32) between the satellite station (30) and the reference station (20).

5. Method according to claim 4, **characterised in that** in method step c., only one-off and short-term data traffic between reference station (20) and mobile unit (4) is provided for initial data initialisation of the mobile unit (4).

6. Method according to claim 4, **characterised in that** when the UWB data transmission between the mobile unit (4) and the satellite station (30) is interrupted, the following further method steps proceed:
a. switching of the data link to radio signal between mobile unit (4) and reference station (20)
b. the mobile unit (4) conveys the last position determined using UWB to the reference station (20)
c. the satellite station (30) conveys ID, MAC, time, and the last determined height, step direction and step length of the operative person (1, 1') to the reference station (20)e., the duty computer (19) determines from the data of the reference station (20) the current location of the operative person (1, 1') and the mobile unit (4)f. carried along by him, the duty computer (19) reproduces the current location of the operative person (1, 1') graphically, calculates rescue path/plane, height, distance and displays the rescue path graphically.

7. Method according to claim 6, **characterised in that** in method step a. and b., the mobile unit (4) transmits radio waves to the reference station (20) with detail of the last position of the operative person, and **in that** in method step c., the satellite station (30) likewise transmits radio waves to the reference station (20) with detail of the last position of the operative person (1, 1') and further details, namely the last determined step length (7), step direction, height of the operative person above ground, time and the walking direction of the operative person.

8. Method according to one of claims 4 to 7, **characterised in that** the duty computer (19) shows on a graphic display (21) both in plan view and in front view, the operative planes (22) of the building (14) and in plan view, the current whereabouts of the injured operative person (1, 1') and a rescue path (42).

## Revendications

1. Système pour la localisation de personnes (1, 1') à l'intérieur d'une zone à surveiller (14), avec plusieurs appareils émetteurs et récepteurs (4, 19, 20, 30) parmi lesquels au moins un appareil (4) est installé sur l'intervenant à localiser (1, 1'), tandis qu'au moins un appareil est prévu en dehors de la zone à surveiller (14), sous la forme d'un ordinateur d'intervention (19), et qu'un autre appareil est conçu comme une station satellite (30), les appareils (4, 19, 20, 30) communiquant entre eux par l'intermédiaire de liaisons de données radio (12, 13, 16, 17, 23, 24, 25, 32, 36, 43), la liaison de données radio (12, 32) entre les appareils (4, 20, 30) étant une liaison de données initiale à bande ultralarge (12, 32), et en cas d'interruption de la liaison de données à bande ultralarge (12) entre les unités émettrices et réceptrices mobiles (4) sur l'intervenant (1, 1') et la station satellite (30) l'unité émettrice et réceptrice mobile (4) étant apte à émettre et/ou recevoir vers l'appareil émetteur et récepteur (20), conçu comme une station de référence, en mode radio (13) comme variante de la liaison de données à bande ultralarge (12), l'intervenant (1, 1') portant sur le corps au moins un autre capteur (5, 6, 8, 9) qui détecte au moins le profil de mouvement et/ou l'état de l'intervenant (1, 1') et transmettant ceux-ci au moins à l'unité émettrice et réceptrice mobile (4), prévue sur l'intervenant (1, 1'), qui retransmet ces données, **caractérisé en ce que** la station satellite (30) est conçue pour pouvoir être déposée par l'intervenant (1) sur un niveau d'intervention (22), sur le lieu d'entrée de l'intervenant (1), sur ledit niveau d'intervention (22), et il y a une liaison de données à bande ultralarge (12) durable entre l'unité émettrice et réceptrice mobile (4) et la station satellite (30) déposée sur le même niveau, et **en ce qu'**un autre capteur est un capteur de pas (5, 6) qui est apte à déterminer la longueur des pas (7) et/ou à déterminer le sens des pas et/ou à déterminer la hauteur, et qui entre dans l'appareil mobile (4), à partir de la station satellite (30) déposée, les données de capteur déterminées, comme données d'éloignement de l'intervenant (1),
au moment où l'intervenant (1) entre dans le niveau d'intervention (22), une liaison de données (23) est établie pour un échange de données entre l'unité mobile (4) et la station de référence (20), l'unité mobile (4) étant conçue pour transmettre en premier les données (26) qui contiennent la hauteur de la station de référence RS (20) plus la hauteur d'intervention, et également l'identification de l'unité mobile, le contrôle d'accès au support, l'heure et les données de capteur, afin de constater le type, la trajectoire, la direction, etc. de l'intervenant (1), et la station satellite (30) est conçue pour recevoir et maintenir une liaison de données à bande ultralarge (32) avec la station de référence (20).

2. Système selon la revendication 1, **caractérisé en ce que** l'autre capteur est un capteur de pression (9) qui est apte à constater si l'intervenant est allongé sur le sol, est à genoux ou rampe ou décrit des mouvements similaires, et qui entre les données de capteur dans l'appareil mobile (4).

3. Système selon la revendication 1 ou 2, **caractérisé en ce qu'**entre la station satellite (30) et la station de référence (20), il existe sélectivement une liaison de données à bande ultralarge (32) ou une liaison radio (43).

4. Procédé pour utiliser le système selon la revendication 1, **caractérisé en ce que** dans le cas d'une intervention, les étapes suivantes se déroulent :
a. l'intervenant (1) dépose sur le niveau d'intervention (22) la station satellite (30), sur le lieu d'entrée dudit intervenant sur le niveau d'intervention,
b. au moment où l'intervenant (1) entre dans le niveau d'intervention (22), un échange de données est réalisé entre l'unité mobile (4) et la station de référence (20), grâce au fait que l'unité mobile (4) transmet en premier les données (26) qui contiennent la hauteur de la station de référence RS (20) plus la hauteur d'intervention, et également l'identification de l'unité mobile, le contrôle d'accès au support, l'heure et les données de capteur, afin de constater le type, la trajectoire, la direction, etc. de l'intervenant (1),
c. établissement d'une voie d'émission à bande ultralarge (23) entre l'unité mobile (4) et la station de référence (20)
d. établissement d'une liaison à bande ultralarge (12) entre l'unité mobile (4) et une station satellite (30)
e. transmission de l'identification, du contrôle d'accès au support, de l'heure, de la hauteur, du sens des pas et de la longueur des pas de l'unité mobile (4) vers la station satellite (30)
f. établissement et maintien d'une liaison de données à bande ultralarge (32) entre la station satellite (30) et la station de référence (20).

5. Procédé selon la revendication 4, **caractérisé en ce que** lors de l'étape de procédé c, il y a seulement un trafic de données unique et bref entre la station de référence (20) et l'unité mobile (4) pour l'initialisation de données initiale de l'unité mobile (4).

6. Procédé selon la revendication 4, **caractérisé en ce que** dans le cas d'une interruption de la liaison de données à bande ultralarge entre l'unité mobile (4) et la station satellite (30), les étapes de procédé supplémentaires suivantes se déroulent :
a. passage de la liaison de données à un signal radio entre l'unité mobile (4) et la station de référence (20)
b. l'unité mobile (4) transmet à la station de référence (20) la dernière position déterminée avec la bande ultralarge
c. la station satellite (30) transmet à la station de référence (20)e l'identification, le contrôle d'accès au support, l'heure et les derniers sens des pas, longueur des pas et hauteur détectés. l'ordinateur d'intervention (19) détermine à partir des données de la station de référence (20) la position actuelle de l'intervenant (1,1') et de l'unité mobile (4)f portée par celui-ci. l'ordinateur d'intervention (19) représente graphiquement la position actuelle de la personne (1, 1'), calcule la voie de secours/le niveau, la hauteur, la distance, et représente graphiquement ladite voie de secours.

7. Procédé selon la revendication 6, **caractérisé en ce que** lors des étapes de procédé a. et b., l'unité mobile (4) envoie des ondes radio à la station de référence (20) en indiquant la dernière position de l'intervention, et **en ce que** lors de l'étape de procédé c., la station satellite (30) envoie elle aussi des ondes radio à la station de référence (20) en indiquant la dernière position de l'intervenant (1, 1') et d'autres indications, à savoir les derniers sens des pas, longueur des pas (7), hauteur de l'intervenant au-dessus du sol, hauteur et sens de marche de l'intervenant qui ont été déterminés.

8. Procédé selon l'une des revendications 4 à 7, **caractérisé en ce que** l'ordinateur d'intervention (19) représente sur un affichage graphique (21), aussi bien de dessus que de face les niveaux (22) du bâtiment (14), et de dessus la position actuelle de la personne accidentée (1, 1') ainsi qu'une voie de secours (42).
